# EUROPÄISCHE PATENTANMELDUNG

(11) **EP 0 574 596 A1**
(43) Veröffentlichungstag der Anmeldung: **22.12.1993**
(21) Anmeldenummer: 92109963.6
(22) Anmeldetag: 13.06.1992
(51) Int. Cl.: B65G 53/28

(54) **Vorrichtung zur Saug-Druckförderung von staubförmigen Schüttgütern, insbesondere Zement**

(71) Anmelder: IBAU HAMBURG INGENIEURGESELLSCHAFT INDUSTRIEBAU MBH, D-20459 Hamburg (DE)
(72) Erfinder: Appenzeller, Gerhard, 2105 Seevetal 2 - Over (DE)
(74) Vertreter: von Raffay, Vincenz, Dipl.-Ing.

(57) **Zusammenfassung**

Die Vorrichtung zur Saug- und Druckförderung wird eingesetzt beim Umschlagen von Schiffen in Silos. Sie weist eine Saugförderleitung (7) mit Saugdüse (6) auf, die in das zu entladende Schiff hineinragt und zu einem Empfangsbehälter (1) führt, aus dem eine Druckförderleitung zu dem Silo abführt. Der Empfangsbehälter ist als Schleusenbehälter (1) ausgebildet. Die Zu- und Abförderung in den Schleusenbehälter erfolgt kontinuierlich. Im Bodenbereich des Schleusenbehälters ist eine Schneckenpumpe (2) vorgesehen, der das abzufördernde Schüttgut im Gravitationsfluß zugefördert wird. Sämtliche Teile sind auf einem Straßenfahrzeug (19) angeordnet. Der Schleusenbehälter ist in teleskopartig übereinander angeordnete und zusammenschiebbare Behältersegmente (8) aufgeteilt. Die Vorrichtung arbeitet kontinuierlich, so daß große Fördermengen über große Wege transportiert werden können. Durch die Anordnung auf einem Straßenfahrzeug kann die Vorrichtung an den unterschiedlichsten Punkten eingesetzt werden. Zum Transport werden die Behältersegmente (8) des Schleusenbehälters zusammengeschoben, damit eine für den Straßenverkehr erforderliche geringe Höhe gewährleistet ist. Im Förderbetrieb ist die Höhe entsprechend groß, um für die nötige Füllstandshöhe über der Schneckenpumpe zu sorgen.

## Beschreibung

Die Erfindung betrifft eine Vorrichtung nach dem Oberbegriff des Patentanspruches 1.

Bei derartigen Vorrichtungen werden allgemein kombinierte Saug- und Druckbehälter benutzt. Von einer Saugdüse wird beispielsweise Zement aus einem Laderaum aufgenommen bzw. abgesaugt und in einen Behälter gefördert. Nach erreichter Füllung wird der Behälter als Druckbehälter umfunktioniert und aus diesem dann der Zement durch eine Rohrleitung in ein Silo gefördert, wie es auch aus der DE-31 15 125 C2 hervorgeht. Es findet also immer ein Wechselbetrieb bzw. eine sog. Chargenförderung statt. Bei diesen bekannten Vorrichtungen sind bezüglich der Kapazität und der Förderentfernung Einschränkungen durch die Verwendung einer Venturidüse gegeben, wenngleich auch ein Sauggebläse eingespart werden kann.

In der OS 31 410 65 A1 sind zwei Gefäße vorgesehen, die auch bei anderen Ausführungen und auch in der Praxis in der Regel anzutreffen sind. Die im Saug- und Druckbetrieb wechselnden Gefäßfunktionen entsprechen einem Schleusensystem mit ständig wechselnden Druckbelastungen der zu steuernden Absperreinrichtungen, wie Klappen und Ventilen. Die Ventile unterliegen einem entsprechend hohem Verschleiß, sind sehr anfällig gegen Undichtigkeiten und bedingen damit Kapazitätseinbußen. Als weiter nachteilig wird besonders die in hohen Frequenzen auftretende Druckstoßbelastung am Empfangssilo angesehen. Nach jeder Rehälterentleerung wird bei der Entleerungsphase die im Behälter befindliche Druckluft schlagartig entspannt auf den Silobehälter mit Filteranlage einwirken. Wenn Schäden bzw. Staubaustritte vermieden werden sollen, müssen z.T. sehr aufwendige Zusatzeinrichtungen vorgesehen werden. Dieser Nachteil bei den bekannten Vorrichtungen wirkt sich um so gravierender aus, je höher die Fördermenge und damit die Behältergrößen sowie bei Einsatz dieser Vorrichtungen für unterschiedliche Empfangsstationen sind. Allen bekannten Vorrichtungen ist auch gemein, daß sie mehr oder weniger ortsgebunden sind, d.h. eine Verfahrbarkeit ist nur bedingt vorhanden.

Diese bedingte Verfahrbarkeit gilt besonders für hohe Fördermengen, weil eben durch die vorbeschriebene Vorrichtungs- und Verfahrensweise große Abmessungen für die Apparaturen erforderlich werden, die z.B. einen Straßen- oder Schienentransport ausschließen.

Der Erfindung liegt die Aufgabe zugrunde, eine Vorrichtung nach dem Oberbegriff des Patentanspruches 1 zu schaffen, die mobil ist, d.h. die Anforderungen der Straßenverkehrsordnung erfüllt und dennoch für große Fördermengen und große Förderentfernungen einsetzbar ist. Weiterhin soll die Vorrichtung nicht nur an unterschiedlichen Orten sondern auch unter unterschiedlichsten Betriebsbedingungen einsetzbar sein und dabei gleichzeitig unkompliziert und robust aufgebaut sein.

Die Lösung dieser Aufgabe ist Gegenstand des kennzeichnenden Teils des Patentanspruches 1.

Die Vorrichtung nach der Erfindung arbeitet kontinuierlich, d.h. im oberen Bereich des Schleusenbehälters, in den die Saugförderleitung mündet, herrscht ein geringer Unterdruck. Im Bodenbereich befindet sich die Förderschnecke der das Schüttgut durch Schwerkraft zugefördert wird. Zu diesem Zweck ist es erforderlich, daß eine entsprechende Schüttgutsäule über der Schneckenpumpe aufrechterhalten wird. Dieses geschieht in vorteilhafter Weise durch einen Niveautester (Anspruch 3). Durch die teleskopartige Ausbildung des Schleusenbehälters, ist es möglich, diesen Behälter mit entsprechender Höhe auszubilden und dabei gleichzeitig sicherzustellen, daß er beim Verfahren auf der Straße zusammengeschoben werden kann, damit das Fahrzeug nicht entsprechend überdimensioniert ist. Im Betrieb zum Umschlagen von Schüttgut ist der Schleusenbehälter entsprechend hoch, im Fahrbetrieb auf der Straße entsprechend niedrig.

In den Ansprüchen 2 bis 5 sind weitere vorteilhafte Ausgestaltungen unter Schutz gestellt.

Im folgenden wird die Erfindung unter Hinweis auf die Zeichnung anhand eines Ausführungsbeispieles näher erläutert.

Es zeigt:
- Fig. 1: eine schematische Ansicht einer Ausführungsform einer Vorrichtung nach der Erfindung im ausgefahrenen Zustand, angeordnet auf einem Fahrzeug während der Entladung eines Schiffes;
- Fig. 2: eine der Fig. 1 entsprechende Ansicht mit ausgefahrenem Schleusenbehälter; und
- Fig. 3: eine der Fig. 2 entsprechende Ansicht, jedoch mit eingefahrenem Schleusenbehälter.

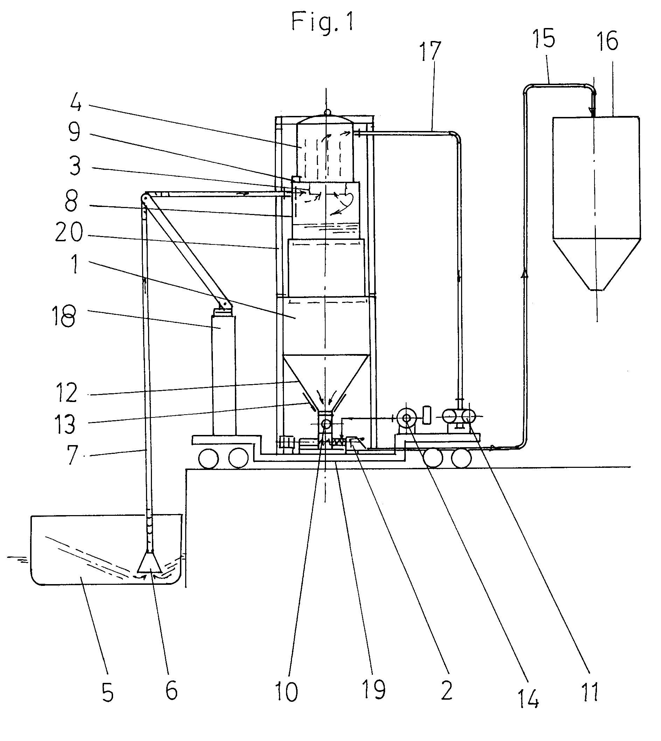

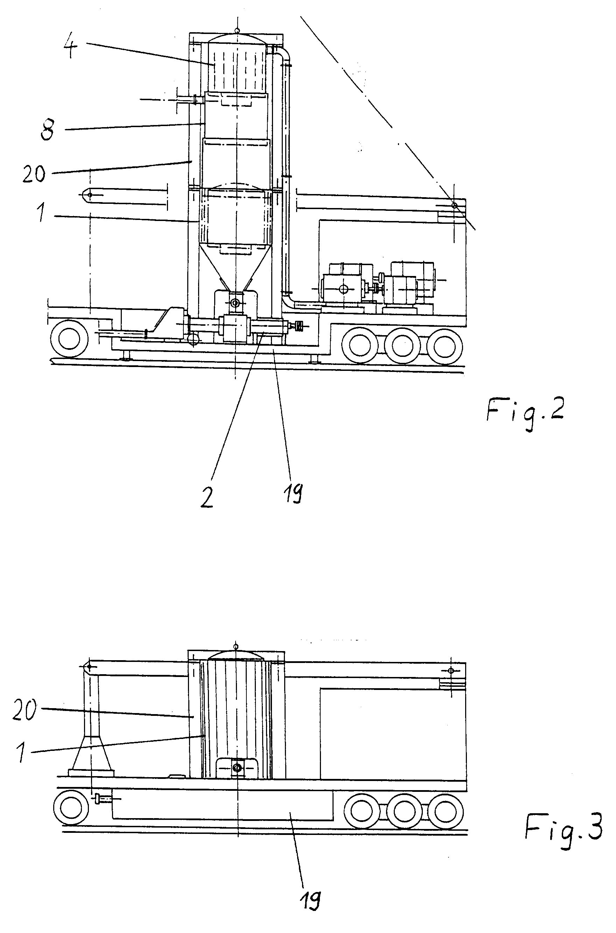

Die in der Zeichnung dargestellte Vorrichtung besteht aus einem Schleusenbehälter 1, der in mehrere übereinander angeordnete Behältersegmente 8 aufgeteilt ist. In den Fig. 1 und 2 sind die Segmente ausgefahren, so daß der Behälter entsprechend hoch ist, um einen kontinuierlichen Betrieb zu ermöglichen. Das obere Behältersegment wird durch einen Abluftfilter 4 gebildet. Ein Fliehkraftvorabscheider 3 dient der Entlastung des Abluftfilters 4.

Das untere Behältersegment weist einen trichterförmigen Abschnitt 12 mit einer Hilfsauflockerung 13 auf. Der trichterförmige Abschnitt führt über einen Dosierschieber 10 zu einer Schneckenpumpe 2. Der Dosierschieber 10 wird mit Hilfe eines Niveautesters 9 gesteuert. Hierdurch wird für einen konstanten Füllstand über dem Dosierschieber 10 am Eintritt in die Schneckenpumpe 2 gesorgt.

Von dem zu entladenden Schiff führt eine Saugförderleitung 7 mit einer Saugdüse 6 in das obere Behältersegment 8.

Die Schneckenpumpe 2 versorgt die Druckförderleitung 15, die zu einem Silo 16 führt.

Der Unterdruck wird mit Hilfe eines Gebläses 11 erzeugt und über eine Leitung 17 im oberen Bereich des Abluftfilters 4 angelegt. Ein Verdichter 14 sorgt für den Druck zur Durchführung der Förderung in der Druckförderleitung 15.

Weiterhin ist eine Hebevorrichtung 18 in Form eines Krans vorgesehen, um die Saugförderleitung 7 mit der Saugdüse 6 zu bewegen und um den teleskopartig ausgebildeten Schleusenbehälter aufzustellen, d.h. die einzelnen Behältersegmente 8 ein- und auszufahren. Die Behältersegmente 8 werden durch Verlängerungsstützen 20 gehalten. Weiterhin sind Dichtungsringe oder Manschetten vorgesehen, die die Behältersegmente im ausgefahrenen Zustand gegeneinander abdichten, damit der erwünschte Unterdruck mit möglichst geringem Verlust aufrechterhalten werden kann.

Wenn die Vorrichtung mit dem Fahrzeug 19 in der in Fig. 3 dargestellten Stellung an den gewünschten Einsatzort gebracht ist, wird sie so aufgestellt, daß sie die Stellung nach den Fig. 1 und 2 einnimmt. Mit Hilfe der Hebevorrichtung 18 werden die einzelnen Behältersegmente 8 aus dem unteren Behältersegment mit dem Trichterabschnitt 12 herausgehoben. Dies gilt auch für den ganz oben vorgesehenen Abluftfilter 4. Wenn dieser Zustand erreicht ist, ist die Vorrichtung zum Einsatz bereit. Durch das Gebläse 11 wird im oberen Bereich ein Unterdruck aufrechterhalten, der im Bereich von 0,5 bar liegt. Dieser Unterdruck ist nicht besonders hoch. Er reicht aber aus, damit das Material aus dem Schiff 5 abgesaugt werden kann und in den Bereich des oberen Behältersegmentes 8 gelangt. Dort ist der Niveautester 9 vorgesehen. Er sorgt dafür, daß über dem Dosierschieber 10 immer eine bestimmte Füllhöhe vorhanden ist, so daß das Schüttgut im Gravitationsfluß nach unten in den Trichterbereich 12 und damit in die Schneckenpumpe 2 abfließt. Die von Feststoffen getrennte und abgereinigte Förderluft entweicht über das Sauggebläse 11 in die Atmosphäre.

In das Auslaufgehäuse der Schneckenpumpe 2 wird durch den Verdichter 14 Druckluft eingeblasen, um das Material zu dem Silo 16 zu fördern. Die Reinluftverbindung zwischen dem Abluftfilter 4 und dem Saugluftgebläse 11 erfolgt durch die Leitung 17.

Der Dosierschieber 10 steht unter niedrigem Druck, da die Hilfsauflockerung 13 nur mit ca. 400 mbar belüftet wird.

Wenn die Entladung beendet ist, wird die Vorrichtung mit Hilfe der Hebevorrichtung 18 wieder in die in Fig. 3 dargestellte eingefahrene Stellung gebracht.

## Patentansprüche

1. Vorrichtung zur Saug-Druckförderung von staubförmigen Schüttgütern, insbesondere Zement, zum Umschlagen von Schiffen oder dergleichen in Silos mit einer Saugförderleitung (7), die in einen Empfangsbehälter (1) führt, aus dem eine Druckförderleitung (15) zu dem Silo (16) führt, dadurch gekennzeichnet, daß der Empfangsbehälter als Schleusenbehälter (1) ausgebildet ist,
daß die Zu- und Abförderung in den Schleusenbehälter kontinuierlich erfolgt,
daß im Bodenbereich des Schleusenbehälters eine Schneckenpumpe (2) vorgesehen ist, der das abzufördernde Schüttgut im Gravitationsfluß zugefördert wird,
daß sämtliche Teile auf einem Straßenfahrzeug (19) angeordnet sind, und
daß der Schleusenbehälter in teleskopartig übereinander angeordnete und zusammenschiebbare Behältersegmente (8) aufgeteilt ist.

2. Vorrichtung nach Anspruch 1, dadurch gekennzeichnet, daß das obere Behältersegment durch einen Abluftfilter (4) gebildet ist.

3. Vorrichtung nach Anspruch 1 oder 2, dadurch gekennzeichnet, daß am Eintritt in die Schneckenpumpe (2) ein verstellbarer Dosierschieber (10) vorgesehen ist, der durch einen Niveautester (9) steuerbar ist, um ein konstantes Schüttgutniveau in dem Schleusenbehälter (1) oberhalb der Schneckenpumpe aufrechtzuerhalten.

4. Vorrichtung nach einem oder mehreren der vorstehenden Ansprüche, dadurch gekennzeichnet, daß zwischen den Behältersegmenten (8) Dichtelemente zur Abdichtung im ausgefahrenen Zustand vorgesehen sind.

5. Vorrichtung nach einem oder mehreren der vorstehenden Ansprüche, dadurch gekennzeichnet, daß auf dem Straßenfahrzeug (19) eine Hebevorrichtung (18) zum Ausfahren der Behältersegmente (8) und zur Betätigung einer am Ende der Saugförderleitung (7) angeordneten Saugdüse (6) vorgesehen ist.
